# FASCICULE DE BREVET EUROPEEN

(11) **EP 3 894 453 B1**
(45) Date de publication et mention de la délivrance du brevet: **11.09.2024**
(21) Numéro de dépôt: 18796722.9
(22) Date de dépôt: 11.10.2018
(51) Int. Cl.: C08F 295/00, C08F 297/06, C08F 12/00

(54) **POLYMERES BLOCS**
BLOCKPOLYMERE
BLOCK POLYMERS

(30) Priorité: 19.10.2017 FR 1759838
(43) Date de publication de la demande: 20.10.2021
(73) Titulaire: Compagnie Générale des Etablissements Michelin, 63000 Clermont-Ferrand (FR)
(72) Inventeur: JEAN-BAPTISTE-DIT-DOMINIQUE, François, 63040 Clermont-Ferrand Cedex 9 (FR); LAFAQUIERE, Vincent, 63040 Clermont-Ferrand Cedex 9 (FR)
(74) Mandataire: M.F.P. Michelin
(86) Numéro de dépôt international: PCT/FR2018/052525
(87) Numéro de publication internationale: WO 2019/077235

(56) Documents cités:
- WO-A2-2007/054224
- US-A- 4 669 518
- ZHENXI WANG ET AL: "Preparation, kinetics and microstructures of well-defined PS-b-PS/Bd diblock copolymers via RAFT miniemulsion polymerization", JOURNAL OF POLYMER RESEARCH, vol. 20, no. 11, 14 October 2013 (2013-10-14), NL, XP055483158, ISSN: 1022-9760, DOI: 10.1007/s10965-013-0288-0
- HUGO XICOHTENCATL-SERRANO ET AL: "Synthesis and characterization of poly (styrene- b -[(butadiene) 1- x -(ethylene- co -butylene) x ] - b -styrene) star-like molecular polymers produced by partial hydrogenation of SBS", POLYMER ENGINEERING AND SCIENCE., vol. 54, no. 10, 20 October 2013 (2013-10-20), US, pages 2332 - 2344, XP055483381, ISSN: 0032-3888, DOI: 10.1002/pen.23796

## Description

La présente invention concerne le domaine des polymères blocs comprenant deux blocs résultant respectivement de la polymérisation d'une oléfine aromatique et de la polymérisation d'oléfines.

Il est toujours d'intérêt de développer de nouveaux polymères blocs qui présentent une microstructure originale en vue de toujours proposer des matériaux différents. Or, il n'est pas connu de polymères blocs dont un des blocs résulte de la polymérisation d'une α-monoléfine aromatique et un autre résulte de la copolymérisation d'un 1,3-diène avec certaines monooléfines.

En utilisant un procédé particulier, la Demanderesse a découvert la synthèse d'un nouveau polymère bloc. Ce polymère a une composition particulière, puisqu'un des blocs a une microstructure accessible par polymérisation anionique et un des autres blocs a une microstructure accessible par polymérisation réalisée en présence d'un métallocène.

Ainsi, l'invention concerne un polymère comprenant un premier bloc et un deuxième bloc, le premier bloc comprenant des unités monomères d'une première α-monoléfine aromatique, le deuxième bloc comprenant des unités monomères d'un deuxième 1,3-diène et des unités monomères d'une deuxième oléfine choisie dans le groupe constitué par l'éthylène, les α-monoléfines et leurs mélanges, la première α-monoléfine aromatique étant de formule CH₂=CH-Ar, Ar représentant un groupe aromatique, substitué ou non, à condition que si le deuxième bloc est une chaîne copolymère d'un 1,3-diène et d'une α-monoléfine aromatique de formule CH₂=CH-Ar', Ar' représentant un groupe aromatique, substitué ou non, les unités diéniques de structure 1,4-trans dans le deuxième bloc représentent plus de 80% en mole des unités diéniques de structure 1,4 du deuxième bloc.

### I. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les monomères.

Le polymère bloc conforme à l'invention qui comprend deux blocs est avantageusement un polymère dibloc.

Le polymère bloc a pour caractéristique essentielle d'être formé d'un premier bloc qui comprend des unités monomères d'une première α-monoléfine aromatique. La première α-monooléfine aromatique est une α-monoléfine de formule CH₂=CH-Ar, Ar représentant un groupe aromatique, substitué ou non. De préférence, le groupe aromatique est un groupe phényle ou un groupe aryle. La première α-monooléfine aromatique est plus préférentiellement le styrène ou un styrène substitué par un ou plusieurs groupes alkyles, encore plus préférentiellement le styrène.

Selon un mode de réalisation de l'invention, le premier bloc comprend plus de 0 à 100% en moles d'unités monomères de la première α-monoléfine aromatique et de 0 à moins de 100% en moles d'unités monomères d'un premier 1,3-diène. Le premier bloc peut donc être un homopolymère de la première α-monoléfine aromatique ou un copolymère de la première α-monoléfine aromatique et d'un premier 1,3-diène. Le premier 1,3-diène est préférentiellement le 1,3-butadiène, l'isoprène ou leur mélange.

Selon un mode de réalisation particulier de l'invention, le premier bloc est une chaîne homopolymère de la première α-monoléfine aromatique, de préférence une chaîne polystyrène.

Selon un autre mode de réalisation particulier de l'invention, le premier bloc est une chaîne copolymère de la première α-monoléfine aromatique et du premier 1,3-diène, notamment une chaîne copolymère de styrène et de 1,3-butadiène.

Selon un autre mode de réalisation de l'invention, le premier bloc contient plus de 10 unités monomères, préférentiellement plus de 100 unités monomères. Ce mode de réalisation est particulièrement avantageux lorsque le premier bloc est un homopolymère de la première α-monooléfine aromatique, car le polymère bloc présente une température de transition vitreuse très supérieure à la température ambiante, en particulier supérieure à 50°C, ce qui peut conférer des propriétés particulières au polymère bloc.

Le premier bloc du polymère bloc conforme à l'invention est de préférence une chaîne atactique, de manière plus préférentielle un polystyrène atactique.

Le polymère bloc a également pour autre caractéristique essentielle d'être formé d'un deuxième bloc qui comprend des unités monomères d'un deuxième 1,3-diène et des unités monomères d'une deuxième oléfine.

Le deuxième 1,3-diène peut être identique au premier 1,3-diène ou en être différent. Le deuxième 1,3-diène est préférentiellement le 1,3-butadiène, l'isoprène ou leur mélange, plus préférentiellement le 1,3-butadiène. La deuxième oléfine est choisie dans le groupe constitué par l'éthylène, les α-monoléfines et leurs mélanges. L'α-monoléfine peut être aliphatique ou aromatique. L'α-monoléfine aliphatique est un alcène ayant de préférence 3 à 18 atomes de carbone tel que le propène, le 1-butène, le 1-hexène, le 1-octène, le 1-hexadécène ou leurs mélanges. L'α-monoléfine aromatique est une α-monoléfine de formule CH₂=CH-Ar', Ar' représentant un groupe aromatique, substitué ou non, de préférence phényle ou aryle. L'α-monoléfine aromatique de formule CH₂=CH-Ar' peut être identique à la première α-monoléfine aromatique ou en être différente. Elle est préférentiellement le styrène ou un styrène substitué par un ou plusieurs groupes alkyles, plus préférentiellement le styrène.

Lorsque le deuxième bloc est une chaîne copolymère d'un 1,3-diène et d'une α-monoléfine aromatique, les unités diéniques de structure 1,4-trans dans le deuxième bloc représentent plus de 80% en mole des unités diéniques de structure 1,4 du deuxième bloc.

Selon un mode de réalisation de l'invention, les unités diéniques de structure 1,4-trans dans le deuxième bloc représentent préférentiellement plus de 80% en mole des unités diéniques de structure 1,4 du deuxième bloc, plus préférentiellement plus de 90% en mole des unités diéniques de structure 1,4 du deuxième bloc.

Selon un mode de réalisation de l'invention, les unités diéniques de structure 1,4-trans dans le polymère bloc représente préférentiellement plus de 70% en mole des unités diéniques de structure 1,4 du polymère bloc, plus préférentiellement plus de 80% en mole des unités diéniques de structure 1,4 du polymère bloc.

Selon un mode de réalisation de l'invention, le deuxième bloc comprend plus de 0 à 50% en moles des unités monomères du deuxième 1,3-diène et de 50 à moins de 100% en moles des unités monomères de la deuxième oléfine.

Selon un mode de réalisation préférentiel de l'invention, le deuxième bloc est une chaîne copolymère de 1,3-butadiène et d'éthylène ou une chaîne terpolymère de 1,3-butadiène, d'éthylène et d'une α-monoléfine, l'α-monoléfine étant préférentiellement le styrène. De préférence, le polymère est un dibloc, le premier bloc étant une chaîne de polystyrène, le deuxième bloc étant une chaîne copolymère de 1,3-butadiène et d'éthylène ou une chaîne terpolymère de 1,3-butadiène, d'éthylène et d'une α-monoléfine, l'α-monoléfine étant préférentiellement le styrène. Egalement de manière préférentielle, le polymère est un dibloc, le premier bloc étant une chaîne copolymère de styrène et de 1,3-butadiène, le deuxième bloc étant une chaîne copolymère de 1,3-butadiène et d'éthylène ou une chaîne terpolymère de 1,3-butadiène, d'éthylène et d'une α-monoléfine, l'α-monoléfine étant préférentiellement le styrène.

Selon un mode de réalisation préférentiel de l'invention, le polymère bloc contient des unités cycliques à 6 membres qui sont hydrocarbonées et saturées, de préférence des unités 1,2-cyclohexanediyle. Les unités cycliques résultent d'une insertion particulière des monomères éthylène et 1,3-butadiène dans la chaîne polymère, en plus des unités conventionnelles d'éthylène et de 1,3-butadiène, respectivement -(CH2-CH2)-, (CH2-CH=CH-CH2)- et (CH2-CH(C=CH2))-. Le mécanisme d'obtention d'une telle microstructure est par exemple décrit dans le document Macromolecules 2009, 42, 3774-3779.

Dans le polymère bloc conforme à l'invention, le premier bloc et le deuxième bloc sont liés de préférence directement l'un à l'autre. Autrement dit, le premier bloc est lié préférentiellement de façon covalente au deuxième bloc par un rattachement direct d'un atome de carbone d'une unité monomère du premier bloc à un atome de carbone d'une unité monomère du deuxième bloc.

Les polymères blocs conformes à l'invention peuvent être préparés par un procédé qui confère la microstructure originale du polymère bloc, notamment la composition de chacun des blocs, la spécificité de rattachement direct des deux blocs et la présence de structures cycliques hydrocarbonées et saturées à 6 membres dans le polymère bloc.

Le procédé de préparation du polymère bloc comprend une étape a) et une étape b), l'étape a) étant la réaction d'un métallocène de terre rare et d'un polymère anionique vivant du premier monomère, l'étape b) étant la polymérisation du deuxième monomère en présence du produit de réaction de l'étape a). Le premier monomère est la première α-monoléfine aromatique telle que définie précédemment ou un mélange monomère contenant la première α-monoléfine aromatique et du premier 1,3-diène tel que défini précédemment. Le deuxième monomère est un mélange du deuxième 1,3-diène et de la deuxième oléfine tels que définis précédemment. Le procédé consiste donc à former le deuxième bloc du polymère bloc par polymérisation subséquente après avoir préparé au préalable un polymère anionique vivant. Au terme du procédé, le polymère anionique vivant fait partie intégrante du polymère bloc sous la forme du premier bloc du polymère bloc. Pour la mise en oeuvre du procédé, le polymère anionique vivant est utile aux besoins de l'invention en tant qu'agent d'alkylation du métallocène pour activer le métallocène vis-à-vis de la polymérisation du deuxième monomère. L'étape a) est une réaction d'alkylation du métallocène par le polymère anionique vivant. De préférence, le rapport entre le nombre de moles de polymère vivant et le nombre de mole d'atomes de terre rare dans le métallocène varie dans un domaine allant de 0.8 à 1.2.

L'agent d'alkylation étant le polymère anionique vivant, l'ajout d'un agent d'alkylation d'une autre nature tel qu'un composé ayant une liaison carbone-métal, notamment C-AI ou C-Mg, est inutile dans le procédé. En effet, l'ajout d'un tel composé comme par exemple un trialkylaluminium ou un dialkylmagnésium aurait pour conséquence de diminuer le rendement en polymère bloc et de favoriser la présence d'homopolymère. Le milieu de polymérisation du deuxième monomère est dépourvu préférentiellement de composé ayant une liaison C-Al ou C-Mg.

Le polymère anionique vivant est donc obtenu de façon conventionnelle par polymérisation anionique du premier monomère dans un solvant, dit solvant de polymérisation. Le solvant de polymérisation peut être tout solvant hydrocarboné connu pour être utilisé dans la polymérisation de monomères 1,3-diènes et α-monoléfines aromatiques. De préférence, le solvant de polymérisation est le cyclohexane, le méthylcyclohexane ou le toluène.

Le solvant de polymérisation du premier monomère peut comprendre un additif pour contrôler la microstructure de la chaîne polymère et la vitesse de la réaction de polymérisation. Cet additif peut être un agent polaire tel qu'un éther ou une amine tertiaire, de préférence une amine tertiaire, de manière plus préférentielle une amine tertiaire dite chélalante comme la N,N,N',N'-tétraméthyléthylènediamine. L'additif est le plus souvent utilisé en faible quantité, notamment pour limiter les réactions de désactivation des sites propageants de la polymérisation anionique. La quantité d'additif dans le solvant de polymérisation, traditionnellement indexée sur le nombre de liaison carbone-métal dans le milieu de polymérisation, est réglée selon la microstructure souhaitée de la chaîne polymère et dépend donc du pouvoir complexant de l'additif. L'additif, notamment la N,N,N',N'-tétraméthyléthylènediamine, est préférentiellement utilisé à un taux d'au plus 1 équivalent de liaison carbone-métal, plus préférentiellement à un taux de 0.01 à 0.5 équivalent de liaison carbone-métal.

Le ratio entre la quantité de solvant et la quantité de premier monomère utile à la formation du polymère vivant est choisi par l'homme du métier selon la viscosité souhaitée de la solution polymère vivant. Cette viscosité dépend non seulement de la concentration de la solution polymère, mais aussi de nombreux autres facteurs comme la longueur des chaînes polymères, la nature du contre-ion du polymère vivant, les interactions intermoléculaires entre les chaînes polymères vivantes, le pouvoir complexant du solvant, la température de la solution polymère. Par conséquent, l'homme du métier ajuste la quantité de solvant au cas par cas.

Dans la réaction d'amorçage de la réaction de polymérisation est utilisé un composé connu comme amorceur de la polymérisation anionique des monomères utiles aux besoins de l'invention. De préférence, l'amorceur est un composé qui présente une liaison carbone-métal. L'amorceur est utilisé à un taux choisi en fonction de la longueur de chaîne souhaitée du polymère vivant et peut donc varier dans une large mesure.

De préférence, le polymère vivant est préparé par polymérisation du premier monomère amorcée par un amorceur qui est un composé lithié. A titre d'amorceur lithié, on peut citer les organolithiens, comme les n-butyllithium, le sec-butyllithium et le tert-butyllithium communément utilisés dans la polymérisation anionique des monomères utiles aux besoins de l'invention.

La température de polymérisation pour former le polymère vivant peut varier dans une large mesure. Elle est choisie en fonction notamment de la stabilité de la liaison carbone-métal dans le solvant de polymérisation, des coefficients de vitesse relatifs de la réaction d'amorçage et de la réaction de propagation, de la microstructure visée du polymère vivant. Traditionnellement, elle varie dans un domaine allant de -20 à 100°C, préférentiellement de 20 à 70°C.

Le métallocène utile aux besoins de l'invention dans l'étape a) est un métallocène de terre rare. On rappelle que les terres rares sont des métaux et désignent les éléments scandium, yttrium et les lanthanides dont le numéro atomique varie de 57 à 71. La terre rare est préférentiellement un lanthanide, plus préférentiellement le néodyme (Nd).

De préférence, le métallocène de terre rare comporte le motif de formule (Ia) ou (Ib)

P(Cp¹)(Cp²)Met (Ia)

(Cp¹)(Cp²)Met (Ib)

Met désignant un atome de métal de terre rare,
Cp¹ et Cp², identiques ou différents, étant choisis dans le groupe constitué par les groupes cyclopentadiényles, les groupes indényles et les groupes fluorényles, les groupes pouvant être substitués ou non,
P étant un groupe pontant les deux groupes Cp¹ et Cp², et comprenant au moins un atome de silicium ou de carbone.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

Dans la présente demande, dans le cas du groupe cyclopentadiényle, la position 2 (ou 5) désigne la position de l'atome de carbone qui est adjacent à l'atome de carbone auquel est attaché le pont P, qu'il soit P¹ ou P², comme cela est représenté dans le schéma ci-après.

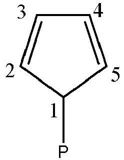

A titre de groupe cyclopentadiényle substitué en position 2 & 5, on peut citer plus particulièrement le groupe tétraméthylcyclopentadiényle.

Dans le cas du groupe indényle, la position 2 désigne la position de l'atome de carbone qui est adjacent à l'atome de carbone auquel est attaché le pont P, qu'il soit P¹ ou P², comme cela est représenté dans le schéma ci-après.

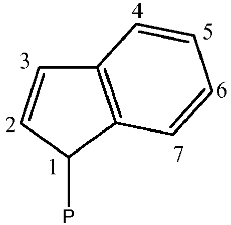

A titre de groupes indényles substitués en position 2, on peut citer plus particulièrement le 2-méthylindényle, le 2-phénylindényle.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

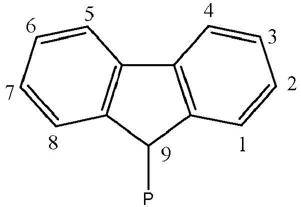

De préférence, Cp¹ et Cp², identiques ou différents, représentent chacun un groupe cyclopentadiényle non substitué, un groupe cyclopentadiényle substitué, un groupe fluorényle non substitué ou un groupe fluorényle substitué. Avantageusement, Cp¹ représente un groupe cyclopentadiényle substitué ou non susbstitué et Cp² représente un groupe fluorényle substitué ou non substitué, de préférence Cp¹ représente un groupe cyclopentadiényle non substitué et Cp² représente un groupe fluorényle non substitué.

Dans la formule (I-a), l'atome Met est relié à une molécule de ligand constitué des deux groupes Cp¹ et Cp² reliés entre eux par le pont P¹. De préférence, le symbole P¹, désigné sous le terme de pont, répond à la formule MR³R⁴, M représentant un atome de silicium ou de carbone, de préférence un atome de silicium, R³ et R⁴, identiques ou différents, représentant un groupe alkyle comprenant de 1 à 20 atomes de carbone. De manière plus préférentielle, le pont P¹ est de formule SiR³R⁴, R³ et R⁴, étant tels que définis précédemment. De manière encore plus préférentielle, P¹ répond à la formule SiMe₂.

Le métallocène peut être de formule (II-a) ou (II-b), de préférence de formule (IIa),

{P(Cp¹)(Cp²)Met-G}_{b} (II-a)

(Cp¹)(Cp²)MetG (II-b)

dans lesquelles
- Met représente un atome de métal de terre rare,
- le symbole G désignant un atome d'halogène choisi dans le groupe constitué par le chlore, le fluor, le brome et l'iode, ou un groupe comprenant le motif borohydrure (BH₄) ou un motif amidure,
- Cp¹, Cp² et P étant tels que définis précédemment, y compris selon les variantes préférentielles,
- b étant égal à 1 ou 2.

Lorsque G désigne un atome d'halogène, G est préférentiellement un atome de chlore.

Avantageusement, dans la formule (II-a) ou (II-b), Cp¹ représente un groupe cyclopentadiényle substitué ou non susbstitué et Cp² représente un groupe fluorényle substitué ou non substitué, de préférence Cp¹ représente un groupe cyclopentadiényle non substitué et Cp² représente un groupe fluorényle non substitué.

Que le métallocène soit de formule (I-a), (I-b), (II-a) ou (II-b), le symbole Met représente de préférence un atome de lanthanide (Ln) dont le numéro atomique va de 57 à 71, de manière plus préférentielle un atome de néodyme (Nd).

Le métallocène est de préférence un métallocène borohydrure de lanthanide ou un métallocène halogénure de lanthanide, notamment un métallocène chlorure de lanthanide. Comme métallocène utile à l'invention, on peut citer les métallocènes de formule (III), (IV), (V), (VI), (VII), (VIII), (IX) ou (X).

[Me₂Si(C₅H₄)(C₁₃H₈)NdCl] (III)

[Me₂Si(C₅H₄)(C₁₃H₈)Nd(BH₄)₂Li(THF)] (IV)

[Me₂Si(C₅H₄)(C₁₃H₈)Nd(BH₄)(THF)] (V)

[Me₂Si(C₁₃H₈)₂NdCl] (VI)

[Me₂Si(C₁₃H₈)₂Nd(BH₄)₂Li(THF)] (VII)

[Me₂Si(C₁₃H₈)₂Nd(BH₄)(THF)] (VIII)

[{Me₂Si(C₁₃H₈)₂Nd(BH₄)₂Li(THF)}₂] (IX)

[Me₂Si(C₁₃H₈)₂Nd(BH₄)] (X)

Le métallocène peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans les demandes WO 2007054223 et WO 2007054224. Le métallocène peut être préparé de façon traditionnelle par un procédé analogue à celui décrit dans les documents EP1 092 731, WO 2007054223 et WO 2007054224, notamment par réaction dans des conditions inertes et anhydres du sel d'un métal alcalin du ligand avec un sel de terre rare comme un halogénure ou un borohydrure de terre rare, ou un sel d'un métal du groupe 4 dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Typiquement, le procédé est mis en oeuvre par l'ajout du métallocène au milieu de polymérisation du premier monomère contenant le polymère anionique vivant. Comme les liaisons carbone-métal présentent dans le milieu de polymérisation du premier monomère sont plutôt sujet à la désactivation en l'absence de monomère à polymériser, l'ajout du métallocène est de préférence effectué au plus tôt après la synthèse du polymère anionique vivant. Comme cela est connu de l'homme du métier, les réactions ainsi que la manipulation des monomères, du métallocène, du polymère anionique vivant, du solvant de polymérisation se font dans des conditions anhydres et sous atmosphère inerte.

La mise en contact du métallocène avec le polymère anionique vivant se fait préférentiellement à une température proche de la température ambiante (23°C), par exemple à température ambiante. Cette mise en contact cause l'activation du métallocène par le polymère anionique vivant. En d'autre terme, le métallocène est rendu actif vis-à-vis de la polymérisation par sa mise en contact avec le polymère anionique vivant. L'introduction du deuxième monomère dans la solution contenant le métallocène activé déclenche la polymérisation subséquente du deuxième monomère. La polymérisation est conduite conformément aux documents EP 1 092 731, WO 2004035639 et WO 2007054224. Une fois le taux de conversion souhaité atteint de la réaction de polymérisation du deuxième monomère, la réaction de polymérisation est stoppée par un agent de terminaison, comme par exemple un composé ayant un proton acide, tel qu'un alcool. Le polymère bloc peut être récupéré, notamment en le séparant du milieu réactionnel, par exemple en le coagulant dans un solvant provoquant sa coagulation ou en éliminant le solvant de polymérisation et tout monomère résiduel sous pression réduite ou sous l'effet d'un entraînement à la vapeur (opération de stripping).

Le procédé permet de synthétiser les polymères blocs conformes à l'invention avec un haut rendement, typiquement d'au moins 90%, et évite ainsi les étapes de séparation et de purification du polymère bloc. Les hauts rendements en polymères blocs concernent aussi la synthèse de polymères blocs dont chacun des blocs a une masse molaire moyenne en nombre supérieures à 5000 g/mol.

Le procédé conduit donc à des polymères blocs originaux. Comme le premier bloc et le deuxième bloc sont synthétisés par des systèmes de polymérisation différents, le procédé permet de combiner des microstructures accessibles par polymérisation anionique et des microstructures accessibles par polymérisation catalysée en présence d'un métallocène. En particulier, une large gamme de température de transition vitreuse peut être atteinte pour le premier bloc tandis qu'une palette de cristallinité du deuxième bloc est aussi possible. Par ailleurs, la proportion relative des blocs dans le polymère bloc peut varier dans une large mesure. Le premier bloc peut par exemple représenter de 0.1 à 99.9% en masse du polymère bloc.

Si le polymère bloc est avantageusement un polymère dibloc, le polymère bloc conforme à l'invention n'est pas limité à un polymère dibloc et peut comprendre d'autres blocs. En effet, dans le procédé de préparation décrit, l'agent d'alkylation peut résulter lui-même de la polymérisation subséquente de charges monomères différentes et dans ce cas il comporte lui-même plusieurs blocs. Par ailleurs, le procédé permet également l'ajout de charges monomères différentes dans l'étape b) qui peut induire alors la formation de bloc de composition différente du deuxième bloc à la suite du deuxième bloc.

L'invention et ses avantages seront aisément compris à la lumière de la description et des exemples de réalisation qui suivent, donnés à titre illustratif et non limitatif.

### II. EXEMPLES DE REALISATION DE L'INVENTION

### 1) Détermination de la température de transition vitreuse des polymères :

La température de transition vitreuse est mesurée au moyen d'un calorimètre différentiel ("Differential Scanning Calorimeter") selon la norme ASTM D3418 (1999).

### 2) Détermination de la température de fusion des polymères :

La température de fusion est mesurée au moyen d'un calorimètre différentiel ("Differential Scanning Calorimeter") selon le mode opératoire suivant : sous atmosphère d'hélium, première montée en température de l'ambiante à 100°C, trempe jusqu'à -150°C, deuxième montée en température de -150C à 200°C selon une rampe de 20°C/min.

Echantillon porté de 25 à -150°C
- Isotherme à -150°C pendant 5 minutes
- chauffage de -150 à +200°C ; à 20°C/min
- Isotherme à +200°C pendant 5 minutes
- Refroidissement de +200 à -150°C ; à 20°C/min
- Isotherme à -150°C pendant 5 minutes
- Chauffage de -150 à +200°C, à 20°C/min

### 3) Préparation des polymères :

Le toluène et le 1,3-butadiène ont été épurés sur garde d'alumine. Le butyllithium provient de chez Aldrich (1,4 mol.L⁻¹) dans l'hexane et a été utilisé sans purification supplémentaire. Les métallocènes [Me₂SiFlu₂Nd(BH₄)₂Li(THF)]₂ et [Me₂SiCpFLuNd(BH₄)₂Li(THF)]₂ ont été préparés selon le protocole décrit dans la demande de brevet FR2893028 et FR 2893029.

Les polymères blocs sont préparés selon le mode opératoire décrit ci-après. Les conditions opératoires propres à chaque synthèse figurent dans les tableaux 1 et 2.

A une solution d'un premier monomère (M1) dans le toluène (100 mL) préparé dans une bouteille Steinie inertée à l'azote est additionnée une solution de butyllithium à 0,19 mol/L dans le toluène (0,5 ml) contenant le cas échéant la N,N,N',N'-tétraméthyléthylènediamine (TMEDA). Le milieu réactionnel est ensuite agité à 60°C pendant 1h30 sauf indication contraire. Après ce temps écoulé, temps pendant lequel a lieu la polymérisation de M1, la solution de polymère anionique vivant obtenue est ensuite transvasée à l'aide d'une canule dans une bouteille Steinie inertée à l'argon et contenant le métallocène (1 ou 2). Le mélange réactionnel est agité pendant 5 minutes à température ambiante jusqu'à ce que l'ensemble du métallocène soit alkylé et passe en solution. Le deuxième monomère (M2) est ensuite introduit selon une quantité de 1 g dans le milieu réactionnel. Le milieu réactionnel est agité pendant 2h à 60°C. Au terme de la réaction, le milieu réactionnel est dépressurisé et 1mL d'éthanol est ajouté pour stopper la réaction de polymérisation. 0,2 ml d'une solution de Santoflex 13 dans le toluène (100g/L) sont ajoutés et la solution de polymère est placée sous vide partiel et balayage d'azote pendant 24h à 60°C.

Le métallocène 1 est [Me₂SiFlu₂Nd(BH₄)₂Li(THF)]₂ ; le métallocène 2 est [Me₂SiCpFLuNd(BH₄)₂Li(THF)]₂.

Le premier monomère (M1) est le styrène. Le deuxième monomère (M2) est un mélange (E/B) de 80% en mole d'éthylène et 20% en mole de 1,3-butadiène.

Les conditions de synthèse du premier bloc figurent dans le tableau 1. Le tableau 1 indique également la température de transition vitreuse (« Tg polymère 1^{er} bloc ») d'un polymère obtenu dans les mêmes conditions opératoires que la synthèse du premier bloc du polymère bloc.

Les conditions de synthèse du deuxième bloc figurent dans le tableau 2.

Les conditions de synthèse du deuxième bloc diffèrent d'un essai à l'autre et sont indiquées dans le tableau 2.

Les caractéristiques des polymères blocs résultant des essais figurent aussi dans le tableau 2. Dans le tableau 2, l'écriture (S)-(EB) désigne un polymère bloc dont le premier bloc est un polystyrène (S) et le deuxième bloc est un copolymère de 1,3-butadiène et d'éthylène (EB).

Les polymères blocs des essais 1 et 2 allient un premier bloc avec une microstructure accessible par la polymérisation anionique et un deuxième bloc avec une microstructure accessible par la polymérisation catalysée en présence d'un métallocène de terre rare. De façon encore plus particulière, le polymère bloc de l'essai 1 a une microstructure d'autant plus originale que le deuxième bloc contient des unités cycliques à 6 membres, hydrocarbonées et saturées, en l'espèce 1,2-cyclohexanediyle, résultant d'une insertion particulière des monomères éthylène et 1,3-butadiène dans la chaîne polymère, en plus des unités conventionnelles d'éthylène et de 1,3-butadiène, respectivement -(CH₂-CH₂)-, (CH₂-CH=CH-CH₂)- et (CH₂-CH(C=CH₂))-.

**Tableau 1**

| Synthèse du premier bloc | |
|---|---|
| M1 | Styrène 1 mL |
| BuLi | 0.50 mL (95 µmol) |
| « Tg polymère 1^{er} bloc » | 44°C |

**Tableau 2**

| Essai | Métallocène (90 µmol) | M2 | Polymère bloc | % 1^{er} bloc | Tg 1^{er} bloc | Tg 2^{ème} bloc | Tf 2^{ème} bloc |
|---|---|---|---|---|---|---|---|
| 1 | 1 | E/B | (S)-(EB) | 49 | 44°C | -34°C | Phénomène endothermique étalé de -30°C à -20°C |
| 2 | 2 | E/B | (S)-(EB) | 52 | - | | -15 à 140°C |

## Revendications

1. Polymère bloc comprenant un premier bloc et un deuxième bloc,
- le premier bloc comprenant des unités monomères d'une première α-monoléfine aromatique, la première α-monoléfine aromatique étant de formule CH₂=CH-Ar, Ar représentant un groupe aromatique, substitué ou non,
- le deuxième bloc comprenant des unités monomères d'un deuxième 1,3-diène et des unités monomères d'une deuxième oléfine choisie dans le groupe constitué par l'éthylène, les α-monoléfines et leurs mélanges.
à condition que si le deuxième bloc est une chaîne copolymère d'un 1,3-diène et d'une α-monoléfine aromatique de formule CH₂=CH-Ar', Ar' représentant un groupe aromatique, substitué ou non, les unités diéniques de structure 1,4-trans dans le deuxième bloc représentent plus de 80% en mole des unités diéniques de structure 1,4 du deuxième bloc,
lequel polymère bloc contient des unités 1,2-cyclohexanediyle.

2. Polymère bloc selon la revendication 1 dans lequel le groupe Ar et le groupe Ar' sont indépendamment l'un de l'autre un groupe phényle ou un groupe aryle.

3. Polymère bloc selon l'une quelconque des revendications 1 à 2, lequel polymère bloc est un dibloc.

4. Polymère bloc selon l'une quelconque des revendications 1 à 3 dans lequel la première α-monoléfine aromatique est le styrène.

5. Polymère bloc selon l'une quelconque des revendications 1 à 4 dans lequel le premier bloc comprend plus de 0 à 100% en moles d'unités de la première α-monoléfine aromatique et de 0 à moins de 100% en moles d'unités d'un premier 1,3-diène.

6. Polymère bloc selon la revendication 5 dans lequel le premier 1,3-diène est le 1,3-butadiène, l'isoprène ou leur mélange.

7. Polymère bloc selon l'une quelconque des revendications 1 à 6 dans lequel le premier bloc est une chaîne homopolymère de la première α-monoléfine aromatique, de préférence une chaîne polystyrène.

8. Polymère bloc selon l'une quelconque des revendications 5 à 6 dans lequel le premier bloc est une chaîne copolymère de la première α-monoléfine aromatique et du premier 1,3-diène.

9. Polymère bloc selon l'une quelconque des revendications 1 à 8 dans lequel le premier bloc contient plus de 10 unités monomères, préférentiellement plus de 100 unités monomères.

10. Polymère bloc selon l'une quelconque des revendications 1 à 9 dans lequel le premier bloc est une chaîne atactique.

11. Polymère bloc selon l'une quelconque des revendications 1 à 10 dans lequel le deuxième bloc comprend plus de 0 à 50% en moles des unités monomères du deuxième 1,3-diène et de 50 à moins de 100% en moles des unités monomères de la deuxième oléfine.

12. Polymère bloc selon l'une quelconque des revendications 1 à 11 dans lequel les unités diéniques de structure 1,4-trans dans le deuxième bloc représentent plus de 80% en mole des unités diéniques de structure 1,4 du deuxième bloc, préférentiellement plus de 90% en mole des unités diéniques de structure 1,4 du deuxième bloc ou dans lequel les unités diéniques de structure 1,4-trans dans le polymère bloc représentent préférentiellement plus de 70% en mole des unités diéniques de structure 1,4 du polymère bloc, plus préférentiellement plus de 80% en mole des unités diéniques de structure 1,4 du polymère bloc.

13. Polymère bloc selon l'une quelconque des revendications 1 à 12 dans lequel le deuxième 1,3-diène est le 1,3-butadiène.

14. Polymère bloc selon l'une quelconque des revendications 1 à 13 dans lequel le deuxième bloc est une chaîne copolymère de 1,3-butadiène et d'éthylène ou une chaîne terpolymère de 1,3-butadiène, d'éthylène et d'une α-monoléfine, préférentiellement styrène.

15. Polymère bloc selon l'une quelconque des revendications 1 à 14 dans lequel le premier bloc est lié de façon covalente au deuxième bloc par un rattachement direct d'un atome de carbone d'une unité monomère du premier bloc à un atome de carbone d'une unité monomère du deuxième bloc.

## Patentansprüche

1. Blockpolymer mit einem ersten Block und einem zweiten Block,
- wobei der erste Block Monomereinheiten eines ersten aromatischen α-Monoolefins umfasst, wobei das erste aromatische α-Monoolefin die Formel CH₂=CH-Ar aufweist, wobei Ar für eine substituierte oder unsubstituierte aromatische Gruppe steht,
- wobei der zweite Block Monomereinheiten eines zweiten 1,3-Diens und Monomereinheiten eines zweiten Olefins, das aus der Gruppe bestehend aus Ethylen, α-Monoolefinen und Mischungen davon ausgewählt ist, umfasst,
mit der Maßgabe, dass dann, wenn es sich bei dem zweiten Block um eine Copolymerkette aus einem 1,3-Dien und einem aromatischen α-Monoolefin der Formel CH₂=CH-Ar', wobei Ar' für eine substituierte oder unsubstituierte aromatische Gruppe steht, handelt, die Dieneinheiten mit trans-1,4-Struktur in dem zweiten Block mehr als 80 Mol-% der Dieneinheiten mit 1,4-Struktur des zweiten Blocks ausmachen,
wobei das Blockpolymer 1,2-Cyclohexandiyleinheiten enthält.

2. Blockpolymer nach Anspruch 1, wobei die Gruppe Ar und die Gruppe Ar' unabhängig voneinander eine Phenylgruppe oder eine Arylgruppe sind.

3. Blockpolymer nach einem der Ansprüche 1 bis 2, wobei es sich bei dem Blockpolymer um einen Diblock handelt.

4. Blockpolymer nach einem der Ansprüche 1 bis 3, wobei es sich bei dem ersten aromatischen α-Monoolefin um Styrol handelt.

5. Blockpolymer nach einem der Ansprüche 1 bis 4, wobei der erste Block mehr als 0 bis 100 Mol-% Einheiten des ersten aromatischen α-Monoolefins und 0 bis weniger als 100 Mol-% Einheiten eines ersten 1,3-Diens umfasst.

6. Blockpolymer nach Anspruch 5, wobei es sich bei dem ersten 1,3-Dien um 1,3-Butadien, Isopren oder eine Mischung davon handelt.

7. Blockpolymer nach einem der Ansprüche 1 bis 6, wobei es sich bei dem ersten Block um eine Homopolymerkette aus dem ersten aromatischen α-Monoolefin, vorzugsweise eine Polystyrolkette, handelt.

8. Blockpolymer nach einem der Ansprüche 5 bis 6, wobei es sich bei dem ersten Block um eine Copolymerkette aus dem ersten aromatischen α-Monoolefin und dem ersten 1,3-Dien handelt.

9. Blockpolymer nach einem der Ansprüche 1 bis 8, wobei der erste Block mehr als 10 Monomereinheiten, vorzugsweise mehr als 100 Monomereinheiten, enthält.

10. Blockpolymer nach einem der Ansprüche 1 bis 9, wobei es sich bei dem ersten Block um eine ataktische Kette handelt.

11. Blockpolymer nach einem der Ansprüche 1 bis 10, wobei der zweite Block mehr als 0 bis 50 Mol-% Monomereinheiten des zweiten 1,3-Diens und 50 bis weniger als 100 Mol-% Monomereinheiten des zweiten Olefins umfasst.

12. Blockpolymer nach einem der Ansprüche 1 bis 11, wobei die Dieneinheiten mit trans-1,4-Struktur in dem zweiten Block mehr als 80 Mol-% der Dieneinheiten mit 1,4-Struktur des zweiten Blocks, vorzugsweise mehr als 90 Mol-% der Dieneinheiten mit 1,4-Struktur des zweiten Blocks, ausmachen oder wobei die Dieneinheiten mit trans-1,4-Struktur in dem Blockpolymer vorzugsweise mehr als 70 Mol-% der Dieneinheiten mit 1,4-Struktur des Blockpolymers, weiter bevorzugt mehr als 80 Mol-% der Dieneinheiten mit 1,4-Struktur des Blockpolymers, ausmachen.

13. Blockpolymer nach einem der Ansprüche 1 bis 12, wobei es sich bei dem zweiten 1,3-Dien um 1,3-Butadien handelt.

14. Blockpolymer nach einem der Ansprüche 1 bis 13, wobei es sich bei dem zweiten Block um eine Copolymerkette aus 1,3-Butadien und Ethylen oder eine Terpolymerkette aus 1,3-Butadien, Ethylen und einem α-Monoolefin, vorzugsweise Styrol, handelt.

15. Blockpolymer nach einem der Ansprüche 1 bis 14, wobei der erste Block über eine direkte Verknüpfung eines Kohlenstoffatoms einer Monomereinheit des ersten Blocks mit einem Kohlenstoffatom einer Monomereinheit des zweiten Blocks kovalent mit dem zweiten Block verknüpft ist.

## Claims

1. Block polymer comprising a first block and a second block,
- the first block comprising monomer units of a first aromatic α-mono-olefin, the first aromatic α-mono-olefin being of formula CH₂=CH-Ar, Ar representing a substituted or unsubstituted aromatic group,
- the second block comprising monomer units of a second 1,3-diene and monomer units of a second olefin selected from the group consisting of ethylene, α-mono-olefins and their mixtures,
provided that, if the second block is a copolymer chain of a 1,3-diene and of an aromatic α-mono-olefin of formula CH₂=CH-Ar', Ar' representing a substituted or unsubstituted aromatic group, the diene units of trans-1,4- structure in the second block represent more than 80 mol% of the diene units of 1,4- structure of the second block,
which block polymer contains 1,2-cyclohexanediyl units.

2. Block polymer according to Claim 1, in which the Ar group and the Ar' group are, independently of one another, a phenyl group or an aryl group.

3. Block polymer according to either one of Claims 1 to 2, which block polymer is a diblock.

4. Block polymer according to any one of Claims 1 to 3, in which the first aromatic α-mono-olefin is styrene.

5. Block polymer according to any one of Claims 1 to 4, in which the first block comprises more than 0 mol% to 100 mol% of units of the first aromatic α-mono-olefin and from 0 mol% to less than 100 mol% of units of a first 1,3-diene.

6. Block polymer according to Claim 5, in which the first 1,3-diene is 1,3-butadiene, isoprene or their mixture.

7. Block polymer according to any one of Claims 1 to 6, in which the first block is a homopolymer chain of the first aromatic α-mono-olefin, preferably a polystyrene chain.

8. Block polymer according to either one of Claims 5 and 6, in which the first block is a copolymer chain of the first aromatic α-mono-olefin and of the first 1,3-diene.

9. Block polymer according to any one of Claims 1 to 8, in which the first block contains more than 10 monomer units, preferentially more than 100 monomer units.

10. Block polymer according to any one of Claims 1 to 9, in which the first block is an atactic chain.

11. Block polymer according to any one of Claims 1 to 10, in which the second block comprises more than 0 mol% to 50 mol% of the monomer units of the second 1,3-diene and from 50 mol% to less than 100 mol% of the monomer units of the second olefin.

12. Block polymer according to any one of Claims 1 to 11, in which the diene units of trans-1,4- structure in the second block represent more than 80 mol% of the diene units of 1,4-structure of the second block, preferentially more than 90 mol% of the diene units of 1,4-structure of the second block or in which the diene units of trans-1,4- structure in the block polymer preferentially represent more than 70 mol% of the diene units of 1,4- structure of the block polymer, more preferentially more than 80 mol% of the diene units of 1,4-structure of the block polymer.

13. Block polymer according to any one of Claims 1 to 12, in which the second 1,3-diene is 1,3-butadiene.

14. Block polymer according to any one of Claims 1 to 13, in which the second block is a copolymer chain of 1,3-butadiene and of ethylene or a terpolymer chain of 1,3-butadiene, of ethylene and of an α-mono-olefin, preferentially styrene.

15. Block polymer according to any one of Claims 1 to 14, in which the first block is covalently bonded to the second block by direct joining of a carbon atom of a monomer unit of the first block to a carbon atom of a monomer unit of the second block.
